# EUROPEAN PATENT APPLICATION

(11) **EP 4 506 585 A1**
(43) Date of publication of application: **12.02.2025**
(21) Application number: 23306360.1
(22) Date of filing: 10.08.2023
(51) Int. Cl.: F16F 7/116

(54) **VIBRATION DAMPER FOR A VEHICLE**

(71) Applicant: TOYOTA JIDOSHA KABUSHIKI KAISHA, Toyota-shi, Aichi-ken, 471 8571 (JP)
(72) Inventor: ALTUNCAN, Hakan, 1140 BRUSSELS (BE); MEYRET, Sébastien, 1140 BRUSSELS (BE)
(74) Representative: Cabinet Beau de Loménie

(57) **Abstract**

A vibration damper for a vehicle, having a vibration damper body which comprises:
-a first static portion (32, 32a, 32b) configured to be attached to a vehicle part,
-a second dynamic portion (34) including a damper member (36) and configured to vibrate when submitted to external vibrations,
-at least one bending portion (38, 38a, 38b) connecting the first static portion (32, 32a, 32b) and the second dynamic portion (34) so as to cause the second dynamic portion (34) to vibrate independently from the first static portion (32, 32a, 32b) when submitted to external vibrations

## Description

### BACKGROUND OF THE INVENTION

### 1. Field of the Invention

The invention relates to a vibration damper for a vehicle and a vehicle comprising the vibration damper for a vehicle.

### 2. Description of Related Art

Vibration dampers for vehicles are known, in particular from JP 2020122512 where a damper is attached to a front header portion of a vehicle body to reduce vibration of the body. According to this document, the vehicle vibration damper has a structure in which a mass member and a pair of mounting brackets are elastically connected in the lateral direction by a pair of support rubber elastic bodies.

### SUMMARY OF THE INVENTION

It is an object of the present disclosure to provide a simple vibration damper for a vehicle. It is also an object of the present disclosure to provide a less heavy vehicle vibration damper than in the prior art.

According to the present disclosure a vibration damper for a vehicle is proposed. This vibration damper has a vibration damper body which comprises:
- a first static portion configured to be attached to a vehicle part,
- a second dynamic portion including a damper member and configured to vibrate when submitted to external vibrations,
- at least one bending portion connecting the first static portion and the second dynamic portion so as to cause the second dynamic portion to vibrate independently from the first static portion when submitted to external vibrations.

The at least one bending portion connecting the first static portion and the second dynamic portion physically separates the first static and second dynamic zones from one another, which makes it possible to uncouple the second dynamic portion from the first static portion from the vibration standpoint. Thanks to this simple configuration, the second dynamic portion can vibrate independently from the first static portion when submitted to external vibrations. This configuration makes it possible to avoid vibrations to occur in the static portion which is attached to a vehicle part and, therefore, to lead to clacking noise caused by metal to metal contact between the metallic static portion and the metallic vehicle part when the static portion is made of metal. In the absence of this configuration, the dynamic portion of the damper may transmit unintentional vibration to the static portion which is fixed, e.g. bolted, to the vehicle part, thereby resulting in clacking noise when the portions are metallic. Such clacking noise may be heard during driving on rough road. The above structure is of particularly simple design, less heavy than in the above-cited prior art, cost effective and easy to implement in a vehicle. As a result, this structure is more sustainable for automotive production.

According to further possible aspects:
- the at least one bending portion has a shape of a notch;
- the second dynamic portion is configured to vibrate along a first direction Z, the first static portion, the at least one bending portion and the second dynamic portion being substantially in alignment with each other along a second direction X perpendicular to the first direction Z;
- when viewed in a plane containing the first direction Z and the second direction X, the first static portion extends in the second direction X along a line of extension L1 and the at least one bending portion extends from the first static portion in the first direction Z away from the line of extension L1 of the first static portion so as to form a shape having a convex surface oriented away from said line of extension L1 and an opposite concave surface oriented facing said line of extension L1;
- the second dynamic portion extends substantially along the second direction X away from the at least one bending portion;
- the second dynamic portion comprises at least one segment that also extends in the first direction Z and is offset from the line of extension L1 of the first static portion;
- the at least one segment that also extends in the first direction Z comprises:
   a first segment that extends in the second direction X away from the at least one bending portion, and
   a second segment that extends further in the second direction X away from the first segment;
- the damper member is an additional mass;
- the additional mass is supported by the at least one segment that also extends in the first direction Z;
- the additional mass is supported by the second segment;
- the additional mass is attached to the segment by one of the following: welding, gluing, riveting, bolting etc.;
- when viewed in a plane containing the first direction Z and the second direction X, the first static portion which extends in the second direction X along the line of extension L1 has a first end and an opposite second end, the at least one bending portion extending from the first end of the first static portion in the first direction Z away from the line of extension L1 of the first static portion, the opposite second end of the first static portion extending in the first direction Z away from the line of extension L1, on the same side of the line of extension L1 as the at least one bending portion;
- the first static portion comprises two first static portions each configured to be attached to a vehicle part and the second dynamic portion is connected to the two first static portions through two bending portions respectively;
- when viewed in a plane that is perpendicular to a plane containing the first and second directions Z and X and that contains the second direction X as well as a third direction Y perpendicular to the first and second directions Z and X, the second dynamic portion extends both in the second direction X and the third direction Y and each set composed of one first static portion and one bending portion extends in the second direction X and is separate from the other set composed of the other first static portion and the other bending portion along the third direction Y;
- the first static portion, the at least one bending portion and the second dynamic portion are formed together as a single piece;
- the first static portion, the at least one bending portion and the second dynamic portion are formed together from a sheet of material.

According to the present disclosure, a vehicle comprising a vibration damper for a vehicle as briefly mentioned above is also proposed.

According to further possible aspects:
- the vehicle comprises a header as a vehicle part to which the first static portion of the vibration damper body is attached;
- the header comprises a panel and the damper member of the vibration damper body is arranged above the panel in a vertical direction of the vehicle corresponding to a height of the vehicle when the latter is under normal operating conditions on the ground, the second dynamic portion being configured to vibrate vertically when submitted to external vibrations, the at least one bending portion extending upwardly and away from the panel;
- the damper member of the vibration damper body extends upwardly away from the panel.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic partial perspective view of a vehicle according to an embodiment of the present disclosure;
FIG. 2 is a schematic longitudinal cross section view along section A-A illustrating the arrangement of a vibration damper in the vehicle of FIG. 1 according to an embodiment of the present disclosure; and
FIG. 3 is a schematic partial top view of the front header of the vehicle body represented in FIG. 2 without the roof.

### DETAILED DESCRIPTION OF EMBODIMENTS

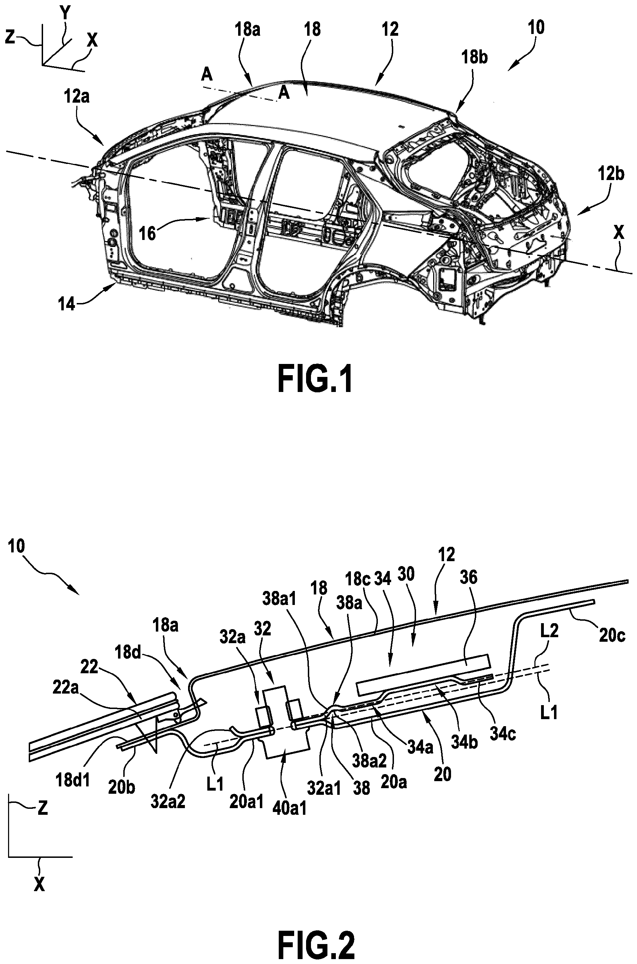

A vehicle 10 in accordance with an embodiment of the present disclosure is schematically and partially illustrated in a perspective view on FIG. 1. This vehicle is, for example, a motor vehicle, an electric vehicle or an hybrid vehicle. The vehicle 10 comprises a body or frame 12 of which only certain parts are represented for the sake of clarity. Overall, the vehicle body 12 extends along a longitudinal direction X from a first front part 12a of the vehicle body (most of the front part 12a including the front cover and the front end chassis have been omitted) to a second opposite rear part 12b of the latter. The longitudinal direction X extends horizontally when the vehicle stands on the ground under normal operating conditions. The reference numbers 12a, 12b for the respective front and rear opposite parts are schematically located in positions that substantially correspond to the front and rear parts of the vehicle body respectively. The vehicle body 12 comprises two side or lateral frame parts 14 and 16 which constitute the flanks of the vehicle body 12 intended each for receiving doors (not represented). The two side frame parts 14 and 16 are both parallel to each other and to longitudinal direction X.

The vehicle body 12 extends along a transverse direction Y which is perpendicular to longitudinal direction X and horizontal. The two side frame parts 14 and 16 are spaced apart from each other along the transverse direction Y and define jointly the width of the vehicle. The vehicle body 12 also extends vertically along a vertical direction Z that is perpendicular to both longitudinal direction X and transverse direction Y.

The vehicle body 12 further comprises a roof 18 that extends along the longitudinal direction X from a first front end 18a of the vehicle body 18 to a second opposite rear end 18b of the latter. The roof 18 also extends along the transverse direction Y between the two lateral frame parts 14 and 16, at an upper portion of each of these parts. Several transverse roof reinforcement members (not represented in FIG. 1) extend transversally between the two lateral frame parts 14 and 16 and are located below the roof 18 in the vertical direction Z.

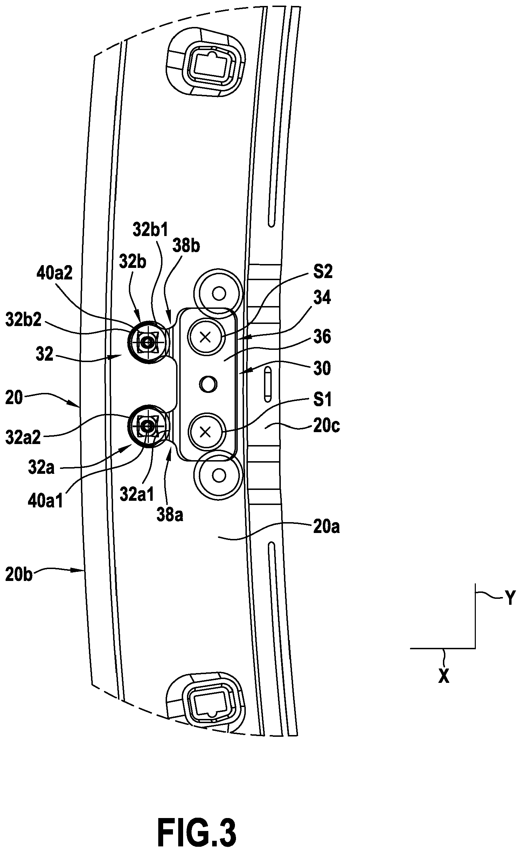

One of these transverse roof reinforcement members is represented in the longitudinal cross section of FIG. 2 that is viewed along the cross section plane A-A of FIG. 1 and is a front header 20. Front header 20 extends both along longitudinal direction X and vertical direction Z (FIG. 2). Front header 20 also extends along transverse direction Y as illustrated in FIG. 3. Front header 20 may be a panel made out of metal as most of the transverse roof reinforcement members.

As represented in FIG. 2, the front header 20 of the vehicle body 12 is located below the roof 18 and attached thereto. In particular, the front header 20 is located below the front end 18a of the roof and attached thereto.

A windshield 22 is mounted in the front part 12a of the vehicle body 12 (FIG. 1), in particular between the front cover (not represented) and the roof 18. The windshield 22 may extend substantially in alignment with the roof 20 (FIG. 2). The windshield 22 is attached to the vehicle body 12. As represented in FIG. 2, the roof 18 comprises a main portion 18c that extends along a direction that is inclined with respect to both directions X and Z, this inclined direction being here oriented in a downward direction toward the front part 12a of the vehicle body. The roof 18 may further comprise, at its front end 18a, a step-shaped portion 18d that is downwardly oriented with respect to the main portion 18c. The step-shaped portion 18d may terminate in the form of a flange 18d1, for example of substantially flat shape. The flange 18d1 extends along transverse direction Y (FIG. 3).

Front header 20 is a panel that has, in the cross section of FIG. 2, an overall shape of a concave piece that includes a concave body 20a flanked by two upper side edges 20b, 20c (the concavity of the panel is oriented upwardly). The concave piece may take the shape of an inverted cup or omega. Side edges 20b, 20c may have each, for example, the shape of a flange of substantially flat shape extending along both directions X and Y (FIG. 3). Side edge 20b may be fixed to the lower face of the termination flange 18d1 of the step-shaped portion 18d (FIG. 2) and windshield 22 is fixed by a peripheral edge 22a to both termination flange 18d1 and side edge 20b which are stacked one above the other. The fixation may be made by spot welding. There are several spot welds with, e.g. 40 to 50mm pitch, all along the flange. Spot weld points are behind the windshield and not visible after the windshield is installed. Side edge 20c may be fixed to the lower face of the main roof portion 18c. The fixation may be made by mastic material points with, e.g. 100 to 150mm pitch, between the roof main portion 18c (roof panel) and the front header panel all along the flange.

As the front header body 20a and the roof portions 18c, 18d (more generally, the part of the roof that is assembled with or fixed to the front header) define each a concave shape facing each other, the two facing concavities of the assembled elements 20a, 18c, 18d define together a housing which accommodates a vibration damper 30 according to an embodiment of the disclosure. It is to be noted that the roof portions and the front header may take many other forms without departing from the scope of the disclosure. Thus, the vibration damper 30 is located above the front header 20 in a vertical direction Z of the vehicle. Also, vibration damper 30 may be placed at another location in the vehicle body so as to dampen vibrations while providing the same advantages as those to be described subsequently.

As represented on FIG. 2, the vibration damper 30 has a vibration damper body which mainly comprises:
- a first static portion 32 configured to be attached to a vehicle part, that is here the front header 20,
- a second dynamic portion 34 including a damper member 36 and that is configured to vibrate vertically (first direction) when submitted to external vibrations (i.e. vibrations taking place in the vehicle body 12 and which may be caused by the driving of the vehicle on the ground, e.g. under normal operating conditions such as cruising at a certain speed, speeding up on highway or driving on rough road),
- at least one bending portion 38 connecting the first static portion 32 and the second dynamic portion 34 so as to cause the second dynamic portion 34 to vibrate independently from the first static portion 32 when submitted to external vibrations. Put it another way, the at least one bending portion 38 makes it possible to separate the dynamic zone of the vibration damper which is supposed to move to dampen a specific frequency range from the static zone of the vibration damper which is not supposed to move. By way of example, within the frequency range lying between 90 and 120 Hz, the measured noise level can be on the order of 60dB without the damper member. Adding the damper member can reduce the noise level down to 47dB within the above frequency range.

As represented in FIG. 3, in the present embodiment the first static portion 32 includes two first static portions 32a, 32b which are each configured to be attached to a vehicle part, that is here the front header 20. In particular, the two first static portions 32a, 32b are attached to different portions of the vehicle part, i.e. of the front header 20, which are spaced apart along the transverse direction Y. Further, the second dynamic portion 34 is connected to the two first static portions 32a, 32b through two bending portions 38a, 38b respectively. The two first static portions 32a, 32b and the two bending portions 38a, 38b constitute separate parallel sets that are spaced apart along the transverse direction Y. Having double connection (two first static portions 32a, 32b connected respectively to the second dynamic portion 34 through two bending portions 38a, 38b respectively) provides a design/configuration with stability and robustness. In particular, positional stability is maintained during assembly and the risk of having rotational motion (in part) along the bolt axis during the vehicle lifetime is greatly reduced and can even be suppressed. To be noted that other configurations may be envisaged for the vibration damper. For instance, a single first static portion 32 and a single bending portion 38 connecting the latter to the second dynamic portion 34 may be envisaged.

In the present embodiment, the bending portions 38a, 38b have each the shape of a notch, as illustrated in FIG.2, which is a simple and cost effective manner to separate the dynamic and static zones of the vibration damper.

As illustrated in FIG.2, the first static portion 32 (first static portions 32a, 32b), the bending portion 38 (bending portions 38a, 38b) and the second dynamic portion 34 are substantially in alignment with each other along a second direction which is here the longitudinal direction X, that is perpendicular to the first direction Z of vibration of the damper member 36.

More particularly, in the cross section of FIG. 2 the first static portion 32 extends in the second direction X, along a line of extension L1, and the bending portion 38 extends from the first static portion 32 in the first direction Z, away from the line of extension L1 of the first static portion 32, so as to form a shape having both a convex surface (38al for bending portion 38a) oriented away from said line of extension L1, here in the upward direction, and an opposite concave surface (38a2 for bending portion 38a) oriented facing said line of extension L1, here in the downward direction.

Still referring to the cross section of FIG. 2, the first static portion 32 which extends in the second direction X along the line of extension L1 has a first end and an opposite second end, i.e. the static portion 32a (resp. 32b in FIG. 3) has a first end 32a1 (resp. 32b1 in FIG. 3) and an opposite second end 32a2 (resp. 32b2 in FIG. 3). Further, the bending portion 38 may extend from the first end of the first static portion 32 in the first direction Z away from the line of extension L1 of the first static portion 32. Here, the bending portions 38a, 38b extend each from the first end 32a1 (resp. 32b1 in FIG. 3) of the first static portion 32a (resp. 32b in FIG. 3) in the first direction Z away from the line of extension L1 of the first static portion 32a (resp. 32b in FIG. 3). The opposite second end of the first static portion 32 may extend in the first direction Z away from the line of extension L1, on the same side of the line of extension L1 as the bending portion 38. Here, the opposite second end 32a2 (resp. 32b2 in FIG. 3) of the first static portion 32a (resp. 32b in FIG. 3) may extend in the first direction Z away from the line of extension L1, on the same side of the line of extension L1 as the bending portion 38a (resp. 38b in FIG. 3). To be noted that the raised configuration of the opposite second end (ex: 32a2 in FIG. 2) is made for avoiding a contact between this end and the body 20a located below when vibrations are transmitted to the vibration damper body. However, this configuration is optional and a straight-oriented opposite second end may be envisaged.

As illustrated in FIG. 3, each static portion 32a, 32b may take the shape of a rounded portion with a central through hole and that is mechanically connected to the second dynamic portion 34 through a corresponding bending portion 38a, 38b. Other shapes may alternatively be envisaged: square, oval etc.

Each static portion 32a, 32b is positioned above the body 20a of the front header 20 and, in particular, above and in contact with a raised portion 20a1 from the body 20a that is raised to a certain height above the rest of the body 20a. This local arrangement of the body 20a makes it possible for the static portion 32a to lie against the raised portion 20a1 without being in contact with the rest of the body 20a and be fixed to the raised portion 20a1. To be noted that a similar raised portion may be formed for the other static portion 32b or the same raised portion may be used for both static portions 32a, 32b if the latter extends transversally from the first place where the static portion 32a is to be fixed to the second place where the static portion 32b is to be fixed. The fixation or attachment may be made through conventional means such as a bolt 40a1, 40a2 for each static portion 32a, 32b (FIG. 3). Fixing each static portion on a raised portion of the body 20a makes it possible for the second dynamic portion 34 to be away from the body 20a. As will be described below, the second dynamic portion 34 is also further configured to be located away from the line of extension L1, which increases the vertical distance between the body 20a and the second dynamic portion 34. Having such a clearance between these two elements further enables a greater range of vertical movement for the second dynamic portion 34 without contacting the body 20a, thereby further reducing the risks for an undesirable and unpleasant noise (metal to metal).

As illustrated in FIG.2, the second dynamic portion 34 extends substantially along the second direction X away from the bending portion 38, that is, here, away from the two spaced apart bending portion 38a, 38b. Further, the second dynamic portion 34 extends, through at least one segment thereof, along the vertical direction Z (first direction) away from the line of extension L1 of the first static portions 32a, 32b, i.e. here along a second line of extension L2 (parallel to L1) so as to be offset upwardly with respect to this line of extension and thus to be further away from the body 20a. To be noted that this vertical extension of the second dynamic portion 34 after the bending portion(s), when following the longitudinal direction from left to right in FIG. 2, is optional and may be omitted in certain embodiments. Thus, the second dynamic portion 34 may extend along the line of extension L1 instead of L2. This can be possible when clearance between the second dynamic portion and the front header located below is sufficient. Generally speaking, this can be assessed by measuring or simulating the range of possible vertical motion of the second dynamic portion when submitted to vibrations.

More particularly, the second dynamic portion 34 (FIG. 2) may comprise:
- a first segment 34a that extends in the second direction X away from the bending portion 38 (from left to right), and
- a second segment 34b that extends further in the second direction X away from the first segment 34a (from left to right).
The second dynamic portion 34 may terminate with an end segment 34c that is substantially at the same level as the first segment 34a.

As illustrated in FIG. 2, the second segment 34b may also be offset vertically so as to also extend along the vertical direction Z and be located further away from the body 20a. This raised configuration with respect to the rest of the second dynamic portion 34 (segments 34a and 34c) makes it possible to locally receive and support the damper member 36 (as will be seen below) without entering into has been designed to minimize contact surface between damper member 36 and second dynamic portion 34. The contact surface should be as small as possible, while being sufficient to secure spot welding quality. In a general manner, in order to avoid any risk of metal to metal contact during rough road drive, and unwanted clacking noise caused by low clearance between metal panels, clearance is being kept between parts unless contact is required to join them.

As illustrated in FIG. 2, the damper member 36 is positioned above the raised segment 34b (i.e. it extends upwardly away from the body 20a), in mechanical contact therewith and attached thereto through any one of the following attachment methods: welding, gluing, riveting, bolting, etc. By way of example, spot welding may be used or riveting, depending on productivity constraints. On FIG. 3 the two circles with the crosses in the middle thereof, denoted S1 and S2, illustrate two spot welding locations. The damper member 36 may thus be easily adjoined to the remaining part of the vibration damper body. The damper member 36 may be made as a single or unitary piece for making easier the assembly with the remaining part of the vibration damper body.

As illustrated in FIG. 2, the damper member 36 may be an additional mass that extends in both directions X and Y as represented in FIG. 3 so as to cover almost all the X, Y dimensions of the second dynamic portion 34. It however terminates at a predetermined distance from the bending portions 38a, 38b so as to avoid contacting the latter and keep certain flexibility in the bending motion. Also, keeping a longer moment arm between the damper member 36 and the bending portions makes it possible to keep the center of gravity of the damper member away from the bending axis and thus to provide high damping efficiency with reasonable weight. If the moment arm is reduced, additional weight would be necessary to achieve same dampening.

As illustrated in FIGS. 2 and 3, the second dynamic portion 34 may take the shape of a plate, e.g. substantially rectangular when viewed from the above (FIG. 3), which includes a raised segment 34b for receiving the damper member 36.

In a general manner, the first static portion 32, the bending portion 38 and the second dynamic portion 34 are formed together as a single or unitary piece, i.e. that is not the result of an assembly of several separate portions. This configuration is easy to manufacture and more reliable than an assembly of separate pieces. By way of example, the single or unitary piece is a sheet of material which may be metal. When using a sheet of metal, the configuration of the vibration damper body can be simply formed mainly through a cutting operation leading to the overall shape of a plate (second dynamic portion) connected or linked to the two static portions (rounded or otherwise shaped pieces) through two arms and a bending operation leading to bending the arms in order to obtain the two notches. Further, the raised segment 34b can be obtained through stamping or pressing and the second ends 32a2, 32b2 can be simply raised by a deforming tool.

This configuration is a simple, light, sustainable and cost effective configuration. When it is made of metal, this configuration makes it possible to prevent clacking noise that is caused by metal to metal contact and thus to avoid adding any additional parts such as seals between the contacting parts.

## Claims

1. A vibration damper (30) for a vehicle, having a vibration damper body which comprises:
- a first static portion (32, 32a, 32b) configured to be attached to a vehicle part,
- a second dynamic portion (34) including a damper member (36) and configured to vibrate when submitted to external vibrations,
- at least one bending portion (38, 38a, 38b) connecting the first static portion (32, 32a, 32b) and the second dynamic portion (34) so as to cause the second dynamic portion (34) to vibrate independently from the first static portion (32, 32a, 32b) when submitted to external vibrations.

2. The vibration damper for a vehicle according to claim 1, wherein the at least one bending portion (38, 38a, 38b) has a shape of a notch.

3. The vibration damper for a vehicle according to claim 1 or 2, wherein the second dynamic portion (34) is configured to vibrate along a first direction (Z), the first static portion (32, 32a, 32b), the at least one bending portion (38, 38a, 38b) and the second dynamic portion (34) being substantially in alignment with each other along a second direction (X) perpendicular to the first direction (Z).

4. The vibration damper for a vehicle according to claim 3, wherein, when viewed in a plane containing the first direction (Z) and the second direction (X), the first static portion (32, 32a, 32b) extends in the second direction (X) along a line of extension (L1) and the at least one bending portion (38, 38a, 38b) extends from the first static portion (32, 32a, 32b) in the first direction (Z) away from the line of extension (L1) of the first static portion (32, 32a, 32b) so as to form a shape having a convex surface oriented away from said line of extension (L1) and an opposite concave surface oriented facing said line of extension (L1).

5. The vibration damper for a vehicle according to claim 4, wherein the second dynamic portion (34) extends substantially along the second direction (X) away from the at least one bending portion (38, 38a, 38b).

6. The vibration damper for a vehicle according to claim 5, wherein the second dynamic portion (34) comprises at least one segment (34a, 34b) that also extends in the first direction (Z) and is offset from the line of extension (L1) of the first static portion (32, 32a, 32b).

7. The vibration damper for a vehicle according to claim 6, wherein the at least one segment that also extends in the first direction (Z) comprises:
- a first segment (34a) that extends in the second direction (X) away from the at least one bending portion, and
- a second segment (34a, 34b) that extends further in the second direction (X) away from the first segment.

8. The vibration damper for a vehicle according to any one of claims 1 to 7, wherein the damper member (36) is an additional mass.

9. The vibration damper for a vehicle according to claims 6 and 8, wherein the additional mass is supported by the at least one segment (34a, 34b) that also extends in the first direction (Z).

10. The vibration damper for a vehicle according to claims 7 and 8, wherein the additional mass is supported by the second segment (34b).

11. The vibration damper for a vehicle according to claim 9 or 10, wherein the additional mass is attached to the segment by one of the following: welding, gluing, riveting, bolting.

12. The vibration damper for a vehicle according to any one of claims 3 to 7, wherein when viewed in a plane containing the first direction (Z) and the second direction (X), the first static portion (32, 32a, 32b) which extends in the second direction (X) along the line of extension (L1) has a first end and an opposite second end, the at least one bending portion (38, 38a, 38b) extending from the first end of the first static portion in the first direction (Z) away from the line of extension (L1) of the first static portion (32, 32a, 32b), the opposite second end of the first static portion (32, 32a, 32b) extending in the first direction (Z) away from the line of extension (L1), on the same side of the line of extension (L1) as the at least one bending portion (38, 38a, 38b).

13. The vibration damper for a vehicle according to any one of claims 1 to 12, wherein the first static portion (32) comprises two first static portions (32a, 32b) each configured to be attached to a vehicle part and the second dynamic portion (34) is connected to the two first static portions (32a, 32b) through two bending portions (38a, 38b) respectively.

14. The vibration damper for a vehicle according to claims 3 and 13, wherein, when viewed in a plane that is perpendicular to a plane containing the first and second directions (Z) and (X) and that contains the second direction (X) as well as a third direction (Y) perpendicular to the first and second directions (Z) and (X), the second dynamic portion (34) extends both in the second direction (X) and the third direction (Y) and each set composed of one first static portion (32a) and one bending portion (38a) extends in the second direction (X) and is separate from the other set composed of the other first static portion (32b) and the other bending portion (38b) along the third direction (Y).

15. The vibration damper for a vehicle according to any one of claims 1 to 14, wherein the first static portion, the at least one bending portion (38, 38a, 38b) and the second dynamic portion (34) are formed together as a single piece.

16. The vibration damper for a vehicle according to any one of claims 1 to 15, wherein the first static portion (32, 32a, 32b), the at least one bending portion (38, 38a, 38b) and the second dynamic portion (34) are formed together from a sheet of material.

17. A vehicle comprising the vibration damper for a vehicle according to any one of claims 1 to 16.

18. The vehicle according to claim 17, wherein it comprises a header (20) as a vehicle part to which the first static portion (32, 32a, 32b) of the vibration damper body is attached.

19. The vehicle according to claim 18, wherein the header comprises a panel (20) and the damper member (36) of the vibration damper body is arranged above the panel (20) in a vertical direction of the vehicle corresponding to a height of the vehicle when the latter is under normal operating conditions on the ground, the second dynamic portion (34) being configured to vibrate vertically when submitted to external vibrations, the at least one bending portion (38, 38a, 38b) extending upwardly and away from the panel (20).

20. The vehicle according to claim 19, wherein the damper member (36) of the vibration damper body extends upwardly away from the panel (20).

## Amended claims

### Amended claims in accordance with Rule 137(2) EPC.

1. A vibration damper (30) for a vehicle, having a vibration damper body which comprises:
- a first static portion (32, 32a, 32b) configured to be attached to a vehicle part,
- a second dynamic portion (34) including a damper member (36) and configured to vibrate when submitted to external vibrations, the second dynamic portion (34) includes a raised segment (34b) with respect to the rest of the second dynamic portion (34), the damper member (36) being in contact with the raised segment (34b) only so as to minimize contact surface between damper member (36) and the second dynamic portion (34),
- at least one bending portion (38, 38a, 38b) connecting the first static portion (32, 32a, 32b) and the second dynamic portion (34) so as to cause the second dynamic portion (34) to vibrate independently from the first static portion (32, 32a, 32b) when submitted to external vibrations, the first static portion (32, 32a, 32b) taking the shape of a rounded portion with a central through hole and being connected to the second dynamic portion (34) through a corresponding bending portion (38, 38a, 38b).

2. The vibration damper for a vehicle according to claim 1, wherein the at least one bending portion (38, 38a, 38b) has a shape of a notch.

3. The vibration damper for a vehicle according to claim 1 or 2, wherein the second dynamic portion (34) is configured to vibrate along a first direction (Z), the first static portion (32, 32a, 32b), the at least one bending portion (38, 38a, 38b) and the second dynamic portion (34) being substantially in alignment with each other along a second direction (X) perpendicular to the first direction (Z).

4. The vibration damper for a vehicle according to claim 3, wherein, when viewed in a plane containing the first direction (Z) and the second direction (X), the first static portion (32, 32a, 32b) extends in the second direction (X) along a line of extension (L1) and the at least one bending portion (38, 38a, 38b) extends from the first static portion (32, 32a, 32b) in the first direction (Z) away from the line of extension (L1) of the first static portion (32, 32a, 32b) so as to form a shape having a convex surface oriented away from said line of extension (L1) and an opposite concave surface oriented facing said line of extension (L1).

5. The vibration damper for a vehicle according to claim 4, wherein the second dynamic portion (34) extends substantially along the second direction (X) away from the at least one bending portion (38, 38a, 38b).

6. The vibration damper for a vehicle according to claim 5, wherein the second dynamic portion (34) comprises at least one segment (34a, 34b) that also extends in the first direction (Z) and is offset from the line of extension (L1) of the first static portion (32, 32a, 32b), the at least one segment (34a, 34b) comprising the raised segment (34b).

7. The vibration damper for a vehicle according to claim 6, wherein the at least one segment (34a, 34b) that also extends in the first direction (Z) comprises:
- a first segment (34a) that extends in the second direction (X) away from the at least one bending portion, and
- the second raised segment (34a, 34b) that extends further in the second direction (X) away from the first segment (34a).

8. The vibration damper for a vehicle according to any one of claims 1 to 7, wherein the damper member (36) is an additional mass.

9. The vibration damper for a vehicle according to claims 6 and 8, wherein the additional mass is supported by the at least one segment (34a, 34b) that also extends in the first direction (Z).

10. The vibration damper for a vehicle according to claims 7 and 8, wherein the additional mass is supported by the second segment (34b).

11. The vibration damper for a vehicle according to claim 9 or 10, wherein the additional mass is attached to the segment by one of the following: welding, gluing, riveting, bolting.

12. The vibration damper for a vehicle according to any one of claims 3 to 7, wherein when viewed in a plane containing the first direction (Z) and the second direction (X), the first static portion (32, 32a, 32b) which extends in the second direction (X) along the line of extension (L1) has a first end and an opposite second end, the at least one bending portion (38, 38a, 38b) extending from the first end of the first static portion in the first direction (Z) away from the line of extension (L1) of the first static portion (32, 32a, 32b), the opposite second end of the first static portion (32, 32a, 32b) extending in the first direction (Z) away from the line of extension (L1), on the same side of the line of extension (L1) as the at least one bending portion (38, 38a, 38b).

13. The vibration damper for a vehicle according to any one of claims 1 to 12, wherein the first static portion (32) comprises two first static portions (32a, 32b) each configured to be attached to a vehicle part and the second dynamic portion (34) is connected to the two first static portions (32a, 32b) through two bending portions (38a, 38b) respectively.

14. The vibration damper for a vehicle according to claims 3 and 13, wherein, when viewed in a plane that is perpendicular to a plane containing the first and second directions (Z) and (X) and that contains the second direction (X) as well as a third direction (Y) perpendicular to the first and second directions (Z) and (X), the second dynamic portion (34) extends both in the second direction (X) and the third direction (Y) and each set composed of one first static portion (32a) and one bending portion (38a) extends in the second direction (X) and is separate from the other set composed of the other first static portion (32b) and the other bending portion (38b) along the third direction (Y).

15. The vibration damper for a vehicle according to any one of claims 1 to 14, wherein the first static portion, the at least one bending portion (38, 38a, 38b) and the second dynamic portion (34) are formed together as a single piece.

16. The vibration damper for a vehicle according to any one of claims 1 to 15, wherein the first static portion (32, 32a, 32b), the at least one bending portion (38, 38a, 38b) and the second dynamic portion (34) are formed together from a sheet of material.

17. A vehicle comprising the vibration damper for a vehicle according to any one of claims 1 to 16.

18. The vehicle according to claim 17, wherein it comprises a header (20) as a vehicle part to which the first static portion (32, 32a, 32b) of the vibration damper body is attached.

19. The vehicle according to claim 18, wherein the header comprises a panel (20) and the damper member (36) of the vibration damper body is arranged above the panel (20) in a vertical direction of the vehicle corresponding to a height of the vehicle when the latter is under normal operating conditions on the ground, the second dynamic portion (34) being configured to vibrate vertically when submitted to external vibrations, the at least one bending portion (38, 38a, 38b) extending upwardly and away from the panel (20).

20. The vehicle according to claim 19, wherein the damper member (36) of the vibration damper body extends upwardly away from the panel (20).
